Europäisches Patentamt

European Patent Office

Office européen des brevets

(11) Veröffentlichungsnummer: **0 185 355**
**A1**

(12) # EUROPÄISCHE PATENTANMELDUNG

(21) Anmeldenummer: **85116084.6**

(22) Anmeldetag: **17.12.85**

(51) Int. Cl.⁴: **B 23 P 15/28**
**//B28D5/04**

(30) Priorität: **20.12.84 DE 3446564**

(43) Veröffentlichungstag der Anmeldung:
**25.06.86 Patentblatt 86/26**

(84) Benannte Vertragsstaaten:
**CH DE FR IT LI**

(71) Anmelder: **HELIOTRONIC Forschungs- und
Entwicklungsgesellschaft für Solarzellen-Grundstoffe
mbH
Johannes-Hess-Strasse 24
D-8263 Burghausen(DE)**

(72) Erfinder: **Ermer, Wolfgang, Dipl.-Ing. (FH)
Margarethenberg 12 1/2
D-8261 Hirten(DE)**

(54) Verfahren zum Herstellen von Klingenpaketen für das Zertrennen von Kristallstäben in Scheiben.

(57) Es wird ein Verfahren zur Herstellung von Klingenpaketen für das Zertrennen von Kristallstäben in Scheiben angegeben. Die Einzelklingen werden zunächst mittels einer Montagelehre in die gewünschte Position ausgerichtet und dann mittels geeigneter Fixiermittel im Endbereich fixiert. Danach wird die Montagelehre entfernt und das Klingenpaket in den Spannrahmen der Gattersäge eingespannt. Das Verfahren ermöglicht eine schnelle und unkomplizierte Herstellung der Klingenpakete, insbesondere durch den Verzicht auf die bisher gebräuchlichen Distanzplättchen.

Fig. 1

Fig. 2

EP 0 185 355 A1

HELIOTRONIC

Forschungs- und Entwicklungsgesellschaft für Solarzellen-
Grundstoffe mbH

München, den 06.12.1984
PAT/Dr.K/gr

Ht 5403
=======

**0185355**

Verfahren zum Herstellen von Klingenpaketen für das Zertrennen von Kristallstäben in Scheiben

Die Erfindung betrifft ein Verfahren zum Herstellen von
Klingenpaketen für das Zertrennen von Kristallstäben in
Scheiben durch Verkleben der Klingen.

Beim Zertrennen von Kristallstäben aus halbleitenden oder
oxidischen Materialien, wie beispielsweise Silicium, Germanium, Galliumarsenid, Indiumphosphid, Saphir, Rubin oder
Galliumgadoliniumgranat,mit Hilfe multipler Trennverfahren
in Scheiben werden die den eigentlichen Materialabtrag bewirkenden Körner entweder lose in einer Aufschlämmung an
die Trennstelle herangeführt (multiples Läpptrennen), oder
sie sind fest an die Klingen gebunden. Bei beiden Verfahrensweisen kann eine ausreichende geometrische Präzision
der erhaltenen Scheiben nur gesichert werden, wenn die jeweils zu Klingenpaketen zusammengefaßten Einzelklingen genau parallel zueinander ausgerichtet sind.

Eine solche genau parallele Ausrichtung wird bekanntlich
dadurch gewährleistet, daß an den Klingenenden zwischen
den Klingen Distanzplättchen eingelegt werden, und diese
Anordnung dann durch Druckkräfte (vgl. z. B. "Feinwerktechnik" 1962, Heft 3, Seite 87) oder durch Klebstoff
(vgl. DE-AS 14 27 735 bzw. US-PS 3,168,087) fixiert wird.

0185355

Da die Distanzplättchen jedoch sehr genau gearbeitet sein müssen, ist ihre Herstellung aufwendig und teuer. Weiterhin besteht oft die Gefahr, daß sich die Distanzplättchen beim Einlegen oder Einspannen verkanten. Die Folge davon sind nicht selten Ausbeuteverluste durch mangelhafte Sägegenauigkeit oder mechanische Beschädigungen des Werkstückes, wie z. B. Ausbrüche oder Risse.

Aufgabe der Erfindung war es, ein Verfahren anzugeben, nach dem sich die Klingenpakete für multiple Trennverfahren mit gebundenem oder losem Korn auf einfachere, weniger aufwendige und kostengünstigere Weise herstellen lassen.

Gelöst wird diese Aufgabe durch ein Verfahren, welches dadurch gekennzeichnet ist, daß vermittels eines den Klingenabstand festlegenden Hilfswerkzeuges die Klingenenden ausgerichtet und mit Hilfe härtbarer haftender Substanzen fixiert werden und daß anschließend das Hilfswerkzeug entfernt wird.

Als Hilfswerkzeuge für das Ausrichten der Klingenenden werden zweckmäßig Montagelehren eingesetzt, die im gewünschten Klingenabstand Ausnehmungen aufweisen, welche der Dicke der Klingen entsprechen und exakt parallel zueinander angeordnet sind. Dabei ist es in der Regel nicht nötig, daß mit Hilfe dieser Hilfswerkzeuge die Klingen über die gesamte Klingenlänge parallel ausgerichtet werden. In den meisten Fällen genügt eine Ausrichtung lediglich im für das Fixieren vorgesehenen Bereich der Klingenenden. Vorzugsweise werden daher kammartige Montagelehren eingesetzt, bei denen die Zinkendicke dem gewünschten Klingenabstand entspricht, während die Zwischenräume zwischen den Zinken gleich der Klingendicke sind. Der Querschnitt der Montagelehren wird in der Regel rechteckig gewählt; eine Breite von 10 - 20 mm ist im allgemeinen ausreichend, um eine einwandfreie Ausrichtung der Klingenenden zu gewährleisten. Die Länge entspricht zweckmäßig der Breite des gewünschten Klingenpaketes, die Tiefe der Ausnehmungen in etwa der Klingenhöhe. Als Werkstoffe kommen grundsätzlich Materialien in Frage, die exakt bearbeitbar sind und durch ihre Formstabilität, Maßhaltigkeit und Abtragsfestigkeit einen häufigen Einsatz gestatten. Bewährt haben sich beispielsweise metallische Werkstoffe, wie Stähle oder dergleichen.

Zur Ausrichtung werden die Klingen von Hand oder maschinell in das Hilfswerkzeug eingelegt. Nötigenfalls wird das Hilfswerkzeug dann in eine Position gebracht, welche die Klingenenden auf der für die Fixierung benötigten Strecke frei über seine Außenkante hinausragen läßt.

Nach beendetem Ausrichten werden die Klingenenden in ihrer durch das Hilfswerkzeug festgelegten Position fixiert. Als Fixierungsmittel eignen sich grundsätzlich härtbare Substanzen, deren Konsistenz es ermöglicht, im Bereich der Klingenenden die Zwischenräume zwischen den Klingen möglichst vollständig auszufüllen, die darüber hinaus zuverlässig auf dem Klingenmaterial haften und deren Scherfestigkeit ausreichend ist, den beim Einspannen und Sägen auftretenden beträchtlichen Scherkräften standzuhalten. Diese Voraussetzungen werden insbesondere von Klebstoffen erfüllt, die für das Kleben von Metallen verwendbar sind, also insbesondere von Reaktionsklebstoffen auf Epoxidharz-, Phenolharz- oder Acrylatharzbasis. Daneben ist beispielsweise auch der Einsatz von, vorzugsweise niedrigschmelzenden, Loten oder Schmelzklebstoffen denkbar. Bevorzugt werden Fixiermittel ausgewählt, deren Aushärtezeiten im Bereich von etwa 15 - 500 Min. liegen. Schneller härtende Substanzen füllen bisweilen die Zwischenräume zwischen den Klingen nicht vollständig aus oder bilden Einschlüsse von Blasen, welche die Scherfestigkeit und Haftung herabsetzen. Der Einsatz von langsamer härtenden Substanzen ist zwar grundsätzlich nicht ausgeschlossen, erhöht jedoch den Zeitbedarf für die Herstellung der Klingenpakete beträchtlich.

Die Haftung der jeweils ausgewählten härtbaren Substanzen
auf den Klingen kann ggf. durch zusätzliche Maßnahmen, wie
z. B. Aufrauhen und/oder sorgfältiges Entfetten der Klingenenden oder Einsatz von Haftvermittlern verbessert werden.

Die Strecke, auf welcher zweckmäßig der Bereich der Klingenenden von der jeweils ausgewählten härtbaren haftenden Substanz umgeben wird, um ausreichende mechanische
Stabilität des Klingenpaketes zu gewährleisten, hängt im
wesentlichen von der Scherfestigkeit der härtbaren haftenden Substanz (C), der Breite des Klingenpaketes (B) und
der Spannkraft (F) ab, mit welcher das Klingenpaket in
den Spannrahmen eingespannt wird. Überschlagsmäßig kann
die je Klingenende mindestens erforderliche Klebestrecke
(K) nach

$$K = \frac{F}{2 \cdot C \cdot B}$$

ermittelt werden. Bewährt haben sich härtbare haftende
Substanzen, die Scherfestigkeiten im Bereich von etwa
30 - 90 N/mm$^2$ aufweisen, da sie bei den gängigen Spannkräften und Klingenpaketbreiten in der Regel sinnvolle
Klebestrecken ermöglichen.

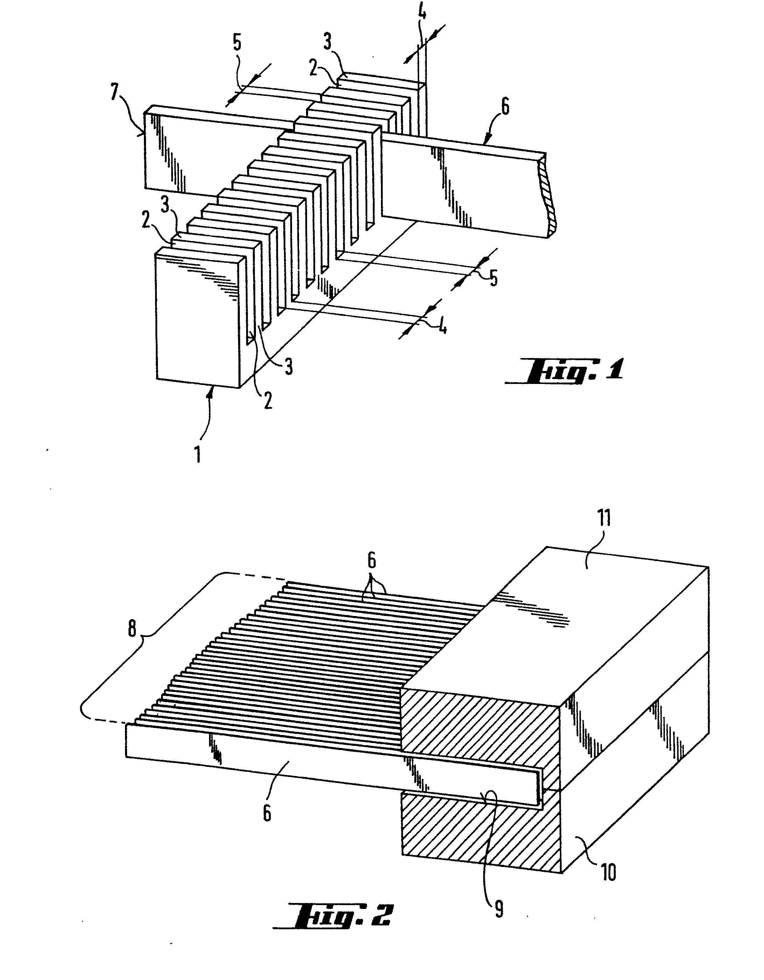

Die Durchführung des erfindungsgemäßen Verfahrens wird
nachstehend anhand der Figuren 1 und 2 beispielhaft näher erläutert.

Figur 1 zeigt eine als Hilfswerkzeug zum Ausrichten der
Klingenenden geeignete kammartige Lehre, Figur 2 ein verklebtes Klingenpaket mit besonderer Formgebung im Bereich
der Klingenenden.

Die in Figur 1 dargestellte, beispielsweise aus Edelstahl gefertigte kammartige Lehre 1 mit rechteckigem Querschnitt besitzt eine Folge von Ausnehmungen 2 und Zinken 3. Die Dicke 4 der Zinken 3 entspricht dem gewünschten Klingenabstand im Klingenpaket, die Weite 5 der Ausnehmungen 2 der Klingendicke. In diese Ausnehmungen werden die Klingen 6 nacheinander oder gleichzeitig eingelegt und zweckmäßig so ausgerichtet, daß die Enden 7 aller Klingen einheitlich um mindestens den für das Verkleben vorgesehenen Abschnitt über die Lehre hinausragen.

Danach können die Zwischenräume zwischen den Klingenendabschnitten mit dem für ihre Fixierung vorgesehenen Mittel ausgefüllt werden, beispielsweise durch Eintauchen, Übergießen oder Bestreichen. Besonders bewährt hat es sich, die ausgerichteten Klingenendabschnitte bei ihrer Fixierung mit, vorzugsweise zusammensetzbaren, Formelementen zu umgeben, welche für die Aufnahme der Klingenenden und des Fixiermittels geeignet geformte Ausnehmungen aufweisen, während ihre Außenform, z. B. als Vierkantleiste oder Zylinder, die paßgerechte Aufnahme in den Spannrahmen gestattet. Eine Möglichkeit besteht beispielsweise darin, die zusammengesetzten Formelemente mit dem vorgesehenen Fixiermittel zu füllen und die ausgerichteten Klingenenden, günstig in senkrechter Position, bis zur vorgesehenen Tiefe einzutauchen und bis zum Ende des Aushärtens in dieser Position zu halten. Oftmals steigt dabei das Fixiermittel aufgrund von Kapillarkräften in den Klingenzwischenräumen nach oben und vergrößert so die Haftfläche. Man kann jedoch auch zunächst die, ggf. bereits mit Fixiermittel vorbehandelten, Klingenenden mit den Formelementen umgeben und dann erst das Fixiermittel einfüllen, um ggf. die Klingenenden endgültig aneinander zu fixieren, sowie sie gleichzeitig mit den Formelementen zu verbinden.

In der Figur 2 ist beispielhaft die Ausbildung des Klingenendbereiches als zur Aufnahme in das Spannmaul des Spannrahmens geeignete Vierkantleiste dargestellt. Das aus einer Vielzahl von Klingen 6 bestehende Klingenpaket 8 ragt dabei in seinem Endbereich in die Ausnehmung 9 des aus den zwei Teilelementen 10 und 11 zusammengesetzten, in Form einer Vierkantleiste gestalteten Formelements. Nicht eigens dargestellt ist das Fixiermittel, das bei dieser Anordnung die Verbindung der Klingenenden untereinander und zum Formelement bewirkt.

Selbstverständlich können die Formelemente auch anders, beispielsweise als Prismen, andere Polygone, Zylinder oder Halbzylinder, gestaltet sein; die Form der Vierkantleiste hat sich jedoch für das Einspannen als besonders zweckmäßig erwiesen. Günstig werden die jeweils ausgewählten Formelemente so angebracht, daß sie seitlich über die das Klingenpaket begrenzenden Klingen hinausragen, um auch in den Randbereichen eine ausreichende Stabilität zu gewährleisten. Ein Vorteil der Formelemente liegt darin, daß sie in der Regel mehrfach verwendbar sind. Wenn jedoch ein Fixiermittel mit geeigneten mechanischen Eigenschaften zur Verfügung steht, kann für die Formgebung des Klingenendbereiches auch auf sie verzichtet werden.

Damit besteht eine Vielzahl von Möglichkeiten, das Klingenpaket an beiden Enden so zu formen, daß es sich leicht in den Spannrahmen einpassen und einspannen läßt. Oftmals können solche Klingenpakete auch ohne aufwendige Umbauten in Spannrahmen eingesetzt werden, welche für herkömmliche Klingenpakete mit Distanzplättchen vorgesehen sind. Geeignete Spannrahmen können jedoch auch demgegenüber einfacher gestaltet sein, da sie keine seitlichen Preßschrauben für das reibschlüssige Fixieren der Klingen und Distanzplättchen benötigen und auch bei den Spannmaulen weitere Toleranzen und geringere Oberflächengüte gestatten. Die nach dem erfindungsgemäßen Verfahren erhältlichen Klingenpakete bieten damit neben der kostengünstigen und weniger aufwendigen Herstellung auch den Vorteil der leichten Handhabbarkeit und erhöhter Schnittpräzision.

Im folgenden wird die Erfindung anhand eines Ausführungsbeispiels näher erläutert.

Ausführungsbeispiel:

Für den Einsatz in einer handelsüblichen Läpptrennmaschine war ein für das Gattersägen von polykristallinen Siliciumblöcken geeignetes Klingenpaket herzustellen. 200 Edelstahlklingen (Länge 430 mm, Höhe 6,35 mm, Breite 0,254 mm) sollten in einem Abstand von 0,58 mm (entsprechend einer Scheibendicke von ca. 0,450 mm) angeordnet und mit einer Spannkraft von 2100 N je Klinge gespannt werden.

Als härtbare haftende Substanz war ein kalthärtender Klebstoff auf Epoxidharzbasis vorgesehen, dessen Scherfestigkeit 40 $N/mm^2$ betrug.

Die benötigte Klebestrecke K je Klingenende konnte mit Hilfe der Formel

$$K = \frac{F}{2 \cdot C \cdot B} = \frac{420 \cdot 10^3}{2 \cdot 40 \cdot 167} = 31 \; [mm]$$

überschlagsmäßig ermittelt werden. In dieser Formel ist

K   die Klebestrecke (mm)
C   die Scherfestigkeit des Klebers ($N/mm^2$)
B   die Breite des Klingenpaketes (mm)
F   die Spannkraft (N).

Die Klingen wurden nun von Hand nacheinander in eine analog Figur 1 geformte Montagelehre aus vergütetem Stahl eingelegt, die einen Querschnitt von 40 x 40 mm$^2$ hatte und auf einer der Klingenpaketbreite entsprechenden Länge (167 mm) 200 7 mm tiefe, rechteckige Ausnehmungen besaß, deren Breite gleich der Klingenbreite (0,254 mm) war, wobei eine Plustoleranz von etwa 5 µm noch als zulässig erachtet wurde. Dieser Wert führt in der Regel zu keiner deutlichen Beeinträchtigung der Schnittpräzision; allgemein ist jedoch eine möglichst genaue Übereinstimmung zwischen Klingen- und Ausnehmungsbreite anzustreben.

Danach wurden die Klingenenden so ausgerichtet, daß sie einheitlich etwa 50 mm über die Montagelehre hinausragten. Nun wurden die Klingenenden etwa 35 mm weit in die hohlquaderförmige Ausnehmung eines in Form einer Vierkantleiste gestalteten, aus 2 symmetrischen Halbschalen zusammengesetzten Formelements aus Edelstahl eingeführt. Diese Anordnung wurde nun in eine annähernd senkrechte Position gebracht, die an unterster Stelle befindliche Hohlform mit dem vorgesehenen fließfähigen, kalthärtenden Kleber vollständig gefüllt, und während ca. 60 Min. aushärten gelassen. Anschließend wurde die Montagelehre zum anderen Klingenende geschoben, welches dann in analoger Weise ebenso in einem vierkantleistenförmigen Formelement fixiert wurde.

Das so erhaltene Klingenpaket wurde nun in einem geeigneten Spannrahmen eingelegt und eingespannt. Nach dem Einbau in die Läpptrennmaschine konnte nach einem üblichen Verfahren (vgl. z. B. DE-OS 27 22 782) ein polykristalliner Siliciumblock (Maße 100 x 100 x 180 mm$^3$) in 199 Scheiben von ca. 450 µm Dicke zersägt werden.

<u>P a t e n t a n s p r ü c h e :</u>

1. Verfahren zum Herstellen von Klingenpaketen für das Zertrennen von Kristallstäben in Scheiben durch Verkleben der Klingen, d a d u r c h   g e k e n n - z e i c h n e t ,  daß vermittels eines den Klingen- abstand festlegenden Hilfswerkzeuges die Klingen- endabschnitte ausgerichtet und mit Hilfe härtbarer haftender Substanzen fixiert werden, und daß anschließend das Hilfswerkzeug entfernt wird.

2. Verfahren nach Anspruch 1, d a d u r c h   g e - k e n n z e i c h n e t ,  daß als härtbare haften- de Substanzen Klebstoffe eingesetzt werden.

3. Verfahren nach den Ansprüchen 1 und 2, d a d u r c h   g e k e n n z e i c h n e t ,  daß je Klingenende die Klingen mindestens auf einer durch die Formel

$$K = \frac{F}{2 \cdot C \cdot B}$$

vorgegebene Strecke K [mm] aneinander fixiert werden, wobei C die Scherfestigkeit der härtbaren haftenden Substanz (N/mm$^2$), B die Breite des Klingenpaketes (mm) und F die vorgesehene Spannkraft (N) ist.

4. Verfahren nach einem oder mehreren der Ansprüche 1 - 3, d a d u r c h   g e k e n n z e i c h n e t ,  daß die Klingenendabschnitte von vierkantleistenförmigen Form- elementen umgeben werden.

Fig. 1

Fig. 2

0185355

1/1

**0185355**
Nummer der Anmeldung

**Europäisches Patentamt**

## EUROPÄISCHER RECHERCHENBERICHT

| EINSCHLÄGIGE DOKUMENTE | | | EP 85116084.6 |
|---|---|---|---|
| **Kategorie** | **Kennzeichnung des Dokuments mit Angabe, soweit erforderlich, der maßgeblichen Teile** | **Betrifft Anspruch** | **KLASSIFIKATION DER ANMELDUNG (Int. Cl 4)** |
| D,Y | DE - B - 1 427 735 (VARIAN ASSO-CIATES) <br> * Spalte 3, Zeilen 10-26; Spalte 4, Zeilen 4-61; Fig. 1 * <br> -- | 1,2,4 | B 23 P 15/28// <br> B 28 D 5/04 |
| Y | DE - B - 1 045 640 (WESTERN ELEC-TRIC COMPANY, INCORPORATED) <br> * Spalte 3, Zeilen 24-30; An-spruch 2; Fig. 1,4,5 * <br> -- | 1,2,4 | |
| A | DE - B - 2 263 118 (WESTERN ELEC-TRIC CO., INC.) <br> * Spalte 6, Zeilen 17-41; Fig. * <br> -- | 1,2,4 | |
| A | US - A - 2 158 229 (GOLDTHWAITE) <br> * Seite 1, rechte Spalte, Zeilen 42-55; Fig. 8-10 * <br> ---- | | **RECHERCHIERTE SACHGEBIETE (Int. Cl 4)** <br><br> B 21 F 27/00 <br> B 23 D 65/00 <br> B 23 P 11/00 <br> B 23 P 15/00 <br> B 28 D 1/00 <br> B 28 D 5/00 <br> B 29 C 45/00 |

Der vorliegende Recherchenbericht wurde für alle Patentansprüche erstellt.

| Recherchenort | Abschlußdatum der Recherche | Prüfer |
|---|---|---|
| WIEN | 24-03-1986 | TROJAN |